# EUROPEAN PATENT APPLICATION

(11) **EP 3 819 784 A1**
(43) Date of publication of application: **12.05.2021**
(21) Application number: 19830895.9
(22) Date of filing: 05.07.2019
(51) Int. Cl.: G06F 16/182, G06F 16/90

(54) **SEARCH DEVICE AND PROGRAM**

(30) Priority: 06.07.2018 JP 2018129224
(71) Applicant: JE International Corporation, Gifu-shi, Gifu 500-8268 (JP)
(72) Inventor: KIM Minsu, Gifu-shi, Gifu 500-8268 (JP)
(74) Representative: HGF
(86) International application number: PCT/JP2019/026772
(87) International publication number: WO 2020/009211

(57) **Abstract**

Provided is a searching device capable of specifying and outputting a suitable chatbot service in response to a question of a user.

The searching device includes an answer extraction unit that acquires answer data from a chatbot server device generating and outputting an answer to an input text, an answer analysis unit that analyzes a feature of the answer data stored in the answer data storage unit, and writes chatbot feature data that is a result of the analysis in the answer data storage unit in association with chatbot identification information, a question analysis unit that analyzes a feature of a question received from an outside and outputs question feature data that is the result of the analysis, a matching evaluation unit that evaluates suitability between the chatbot feature data and the question feature data, and a search result output unit that outputs information of the chatbot server device suitable for the question based on the suitability evaluated by the matching evaluation unit.

## Description

### TECHNICAL FIELD

The present invention disclosed herein relates to a searching device and a searching program. This application claims priority to Japanese Patent Application No. 2018-129224 filed on July 6, 2018, incorporated herein by reference in its entirety.

### BACKGROUND ART

In recent years, a method of providing information using a chat system has shown to tend to spread and expand. The chat system is a system for conversation between users and the like by interaction of text. In addition, by applying artificial intelligence technology, a chat system that automatically responds to questions of a user and the like without human intervention is expected to spread.

Patent Literature 1 discloses a response system technology for learning a relationship pattern between an input text and a response text and automatically generating a response to new input text using the learned model.

### [Citation List]

### [Patent Literature]

Patent Literature 1: Japanese Patent No. 6218057

### DISCLOSURE OF THE INVENTION

### TECHNICAL PROBLEM

A function of a server device that automatically responds without human intervention by using technology such as artificial intelligence as described above is hereinafter referred to as a "chatbot" for convenience. Using the chatbot, it is possible to automatically store knowledge necessary for the user, and furthermore, it is possible to perform machine learning for generating a better refined response text to the input text sent from the user. However, with the spread of the chatbots, a new challenge arises. The challenge is that since many services of chatbots are provided on the Internet, it is not easy to find a chatbot capable of responding to the interests of the user most appropriately.

With regard to general web pages that are not the chatbots, a so-called search engine automatically collects and indexes vast web page information and provides the information to the general public. However, the search engine according to the related art is not necessarily able to efficiently collect chatbot information and provide the information in an appropriate form. This is because general web pages and chatbots differ greatly in the way of providing information.

For chatbots as well as general web pages that are not chatbots, it is strongly required to be able to search for appropriate services according to the interest of the user, or the like. In addition, by making it possible for the user to easily find an appropriate chatbot, it is expected that the overall usefulness of the service using the chatbot will be further increased.

The present invention has been made in consideration of the above-mentioned circumstances, and is to provide a searching device and a searching program capable of checking and outputting an appropriate chatbot service in response to a question of a user and the like.

### TECHNICAL SOLUTION

In order to solve the aforementioned problem, embodiments of the present invention provide a searching system including an answer extraction unit that acquires answer data from a chatbot server device generating and outputting an answer to an input text, the answer data being data on the answer output by the chatbot server device, an answer data storage unit that stores the answer data acquired by the answer extraction unit in association with chatbot identification information for identifying a chatbot server device as an originator, an answer analysis unit that analyzes a feature of the answer data stored in the answer data storage unit, and writes chatbot feature data that is a result of the analysis in the answer data storage unit in association with the chatbot identification information, a question analysis unit that analyzes a feature of a question received from an outside in a situation where the chatbot feature data is held in the answer data storage and outputs question feature data that is the result of the analysis, a matching evaluation unit that evaluates suitability between the chatbot feature data and the question feature data, and a search result output unit that outputs information of the chatbot server device suitable for the question based on the suitability evaluated by the matching evaluation unit.

In some embodiments, the chatbot feature data may be a set of a pair of an attribute name and an attribute value of a thing represented by the answer data, and the question feature data may be a set of a pair of an attribute name and an attribute vale of a thing represented by the question.

In other embodiments, the suitability may be based on a matching degree of the attribute values in the same attribute names between the chatbot feature data and the question feature data.

In still other embodiments, the answer extraction unit may transmit contents of a representative input text (representative question) to the chatbot server device, and acquire the answer data output by the chatbot server device corresponding to the representative input text.

In even other embodiments, the search result output unit may output information of the chatbot server device by including access information for accessing the chatbot server device.

In other embodiments of the present invention, there is provided a program that causes a computer to function as a searching device including an answer extraction unit that acquires answer data from a chatbot server device generating and outputting an answer to an input text, the answer data being data on the answer output by the chatbot server device, an answer data storage unit that stores the answer data acquired by the answer extraction unit in association with chatbot identification information for identifying a chatbot server device as an originator, an answer analysis unit that analyzes a feature of the answer data stored in the answer data storage unit, and writes chatbot feature data that is a result of the analysis in the answer data storage unit in association with the chatbot identification information, a question analysis unit that analyzes a feature of a question received from an outside and outputs question feature data that is the result of the analysis, a matching evaluation unit that evaluates suitability between the chatbot feature data and the question feature data, and a search result output unit that outputs information of the chatbot server device suitable for the question based on the suitability evaluated by the matching evaluation unit.

### ADVANTAGEOUS EFFECTS

According to the present invention, it is possible to build the search engine in a form suitable for the content of the chatbot service. That is, it is possible to output information about the chatbot service by responding to the questions from a user and the like in a manner that is not possible in the related art.

### BRIEF DESCRIPTION OF THE DRAWINGS

FIG. 1 is a block diagram illustrating a schematic functional configuration of a chatbot searching device according to an embodiment of the present invention;
FIG. 2 is a block diagram illustrating a schematic configuration of an entire system that is an environment in which the chatbot searching device according to the embodiment operates;
FIG. 3 is a block diagram illustrating a schematic functional configuration of a chatbot server device to be processed in the embodiment;
FIG. 4 is a schematic diagram illustrating a data structure of a chatbot table stored in a management information storage unit according to the embodiment;
FIG. 5 is a schematic diagram illustrating a data structure of an answer table stored in an answer database storage unit according to the embodiment;
FIG. 6 is a schematic diagram illustrating a data structure of an answer analysis result table stored in the answer database storage unit according to the embodiment;
FIG. 7 is a flowchart illustrating a process procedure for writing answer data which the chatbot searching device according to the embodiment extracts from the chatbot server device in the answer database storage unit; and
FIG. 8 is a flowchart illustrating a process procedure for obtaining and outputting a search result in response to a question transmitted from a terminal device in a situation where result data from analysis of a plurality of chatbot server devices is held in the answer database storage unit according to the embodiment.

### MODE FOR CARRYING OUT THE INVENTION

### [Embodiment]

A chatbot searching device according to the present embodiment is a device that, for example, according to a question (query) input by a user, outputs information of a chatbot server device suitable for the question. In this way, the user may access the chatbot server device suitable for his or her purpose and use a chat service.

In the present embodiment, the chatbot service device and the feature of information provided by the service of the chatbot service device are expressed and utilized in the form of a pair of entity IDs and entity components. This is based on the assumption that things or the like are identified by their attribute information. The entity ID is an attribute name. In addition, the entity component is an attribute value. That is, in the present embodiment, a set of pairs of the entity IDs and the entity components is accumulated as information representing the chatbot server device and the feature of the service. In addition, information representing features of a question (query) of a user is also expressed as a set of pairs of entity IDs and entity components for the question. By performing matching evaluation (evaluation of matching) of the set of pairs for both, a chatbot service device and a service with high suitability for the question are obtained and output.

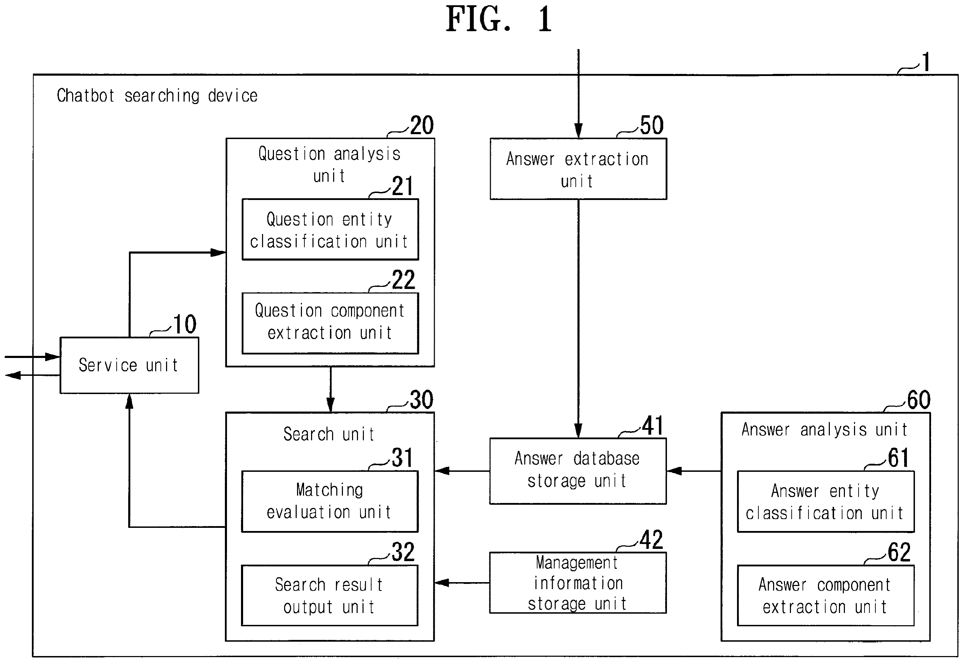

FIG. 1 is a block diagram illustrating a schematic functional configuration of a chatbot searching device according to the present embodiment. As illustrated in the figure, a chatbot searching device 1 is configured to include a service unit 10, a question analysis unit 20, a search unit 30, an answer database storage unit 41, a management information storage unit 42, an answer extraction unit 50, and an answer analysis unit 60.

Each of the functional units may be built using, for example, an electronic circuit. Further, each functional unit may include a storage means such as a semiconductor memory or a magnetic disk device as necessary. Further, each function may be implemented by a computer and a program.

The service unit 10 provides an interface (e.g., a human interface) for a search requestor device (a device requesting a search). Specifically, a question for a search is received from an external device via communication or the like, and search result data corresponding to the question is returned to the external device.

The question analysis unit 20 extracts question feature data by analyzing the question (referred to as search data, search word, query, or the like) received by the service unit 10. That is, the question analysis unit 20 analyzes the features of the question received from the outside, and outputs question feature data that is the result of the analysis. The question feature data indicates the feature of the question. In the present embodiment, the question feature data is a set of pairs of the attribute names (also referred to as "entity IDs") and attribute values (also referred to as "entity components") of the things represented by the question. However, the question feature data may be expressed in another format.

Specifically, the question analysis unit 20 is configured to include a question entity classification unit 21 and a question component extraction unit 22.

The question entity classification unit 21 classifies and outputs the entity ID included in the question.

The question component extraction unit 22 extracts and outputs the entity component corresponding to the entity ID output by the question entity classification unit 21.

The question analysis unit 20 analyzes a question sentence, for example, by using a sentence-semantic analysis method. To this end, the question analysis unit 20 performs syntax analysis of the sentence to be analyzed and generates a syntax tree. In addition, the question analysis unit 20 holds in advance a set of entity ID-possible concepts as dictionary data. The dictionary holds, for example, items such as "location", "menu", "price", "opening time", or "closing time" as the entity ID-possible concept. The entity ID-possible concept illustrated here relates to a restaurant, but the question analysis unit 20 holds dictionary data of the same method in advance for other industries. In addition, the dictionary data held by the question analysis unit 20 includes data representing a relationship between the concepts. For example, the concept "in front of Shibuya Station" is an example (subordinate concept) of the concept of "location". In addition, the concept "Udon" is an example (subordinate concept) of the concept of "menu". The question analysis unit 20 extracts the entity component ("in front of Shibuya Station" or "Udon" in the above example) and the entity ID corresponding to the entity component from the question sentence to be analyzed, by referring to the dictionary data. For example, the entity ID corresponding to the entity component "in front of Shibuya Station" is "location". The entity ID corresponding to the entity component "Udon" is "Menu".

The search unit 30 finds chatbot feature data with high suitability with question feature data, based on the question feature data obtained as a result of the analysis processing by the question analysis unit 20. The search unit 30 outputs information of the chatbot server device 71 as information of the search result in the order of high suitability. The search unit 30 transmits information of the search result to the service unit 10.

Specifically, the search unit 30 is configured to include a matching evaluation unit 31 and a search result output unit 32.

The matching evaluation unit 31 performs a matching evaluation between the question feature data and the chatbot feature data and calculates a value for a matching degree. That is, the matching evaluation unit 31 evaluates suitability between the chatbot feature data and the question feature data.

The search result output unit 32 sorts (e.g., sorts in descending order) and outputs the chatbot IDs based on the matching degree (which is referred to as "suitability") calculated by the matching evaluation unit 31. That is, the search result output unit 32 outputs the information of the chatbot server device 71 suitable for the question originally received from the outside based on the suitability evaluated by the matching evaluation unit 31. In addition, the search result output unit 32 reads the URL associated with the chatbot ID from the management information storage unit 42 and outputs it together. For example, the search result output unit 32 outputs the URL read from a management information storage unit 42 in the form of a hypertext markup language (HTML) hyperlink. That is, the search result output unit 32 outputs information of the chatbot server device 71 by including access information for accessing the chatbot server device 71.

The answer database storage unit 41 stores data (answer data) on examples of answer contents of the chatbot server device 71 and data (chatbot feature data) of an analysis result of the answer data. That is, the answer database storage unit 41 stores the answer data acquired by the answer extraction unit 50 in association with chatbot identification information for identifying the chatbot server device 71 as an originator (acquisition target). Further, the answer database storage unit 41 is also referred to as an "answer data storage unit".

The management information storage unit 42 stores information for management. The data stored by the management information storage unit 42 includes access information (specifically, a URL) for each chatbot server device 71.

The answer extraction unit 50 extracts answer data from the chatbot server device 71 and writes the extracted answer data in a table in the answer database storage unit 41. That is, the answer extraction unit 50 acquires answer data from the chatbot server device 71 generating and outputting an answer to input text, where the answer data is data of the answer output by the chatbot server device 71. Specifically, the answer extraction unit 50 throws a predetermined question to the chatbot server device 71 and receives a response text corresponding to the question.

The answer extraction unit 50 may transmit a plurality of questions to the chatbot server device 71. These questions are called "representative questions." The contents of the representative questions (text data) are to be prepared in advance. In addition, the answer extraction unit 50 writes the answer data in the answer database storage unit 41 in the form of pairs of representative questions and answers. That is, the answer extraction unit 50 transmits a representative input text (representative question) to the chatbot server device 71 as one method, and acquires the answer data output by the chatbot server device 71 corresponding to the representative input text. In addition, instead of the above method, the answer extraction unit 50 may acquire the answer data from the chatbot server device 71 in a batch data transmission method. In this case, the chatbot server device 71 holds in advance data of a set of pairs of the text of the representative questions and the text of the answers corresponding to them, and transmits the data based on the request from the answer extraction unit 50. In this case, the chatbot server device 71 has a special interface for batch transmission of the answer data in advance, in addition to the interface of the normal chat service. In addition, the data of the set of pairs of representative questions and answers is, for example, learning data used by the chatbot server device 71 in a machine learning process, which will be described later.

With the function of the answer extraction unit 50, the answer database storage unit 41 may hold the set of pairs of representative questions (input text) and answers (response text) for each chatbot server device 71.

The answer analysis unit 60 analyzes the answer data held in the answer database storage unit 41, and writes the analysis result in the answer database storage unit 41. More specifically, the answer analysis unit 60 analyzes the features of the answer data held (stored) in the answer database storage unit 41, and writes the chatbot feature data, which is the analysis result, in the answer database storage unit 41 in association with chatbot identification information. The chatbot feature data is data representing features of each chatbot server device 71 or the service content. In the present embodiment, the chatbot feature data is a set of pairs of attribute names and attribute values of things represented by the answer data. However, the chatbot feature data may be expressed in another format. Specifically, the answer analysis unit 60 is configured to include an answer entity classification unit 61 and an answer component extraction unit 62.

The answer entity classification unit 61 classifies the entities based on the pairs of the representative questions and the answers, and outputs the entity IDs associated with the pairs of the representative questions and the answers. In other words, the entity ID is an attribute name.

The answer component extraction unit 62 extracts and outputs entity components based on the pairs of the representative questions and the answers. The entity component is an attribute value corresponding to the aforementioned entity ID.

That is, as a whole, the answer analysis unit 60 obtains and outputs a set of pairs of the entity IDs and the entity components based on the set of the pairs of the representative questions and the answers. Specifically, the answer analysis unit 60 writes the set of the pairs of the entity IDs and the entity components in an answer analysis result table included in the answer database storage unit 41.

Similar to the question analysis unit 20 described above, the answer analysis unit 60 analyzes the representative question and the sentence of the answer, for example, by using the sentence-semantic analysis method.

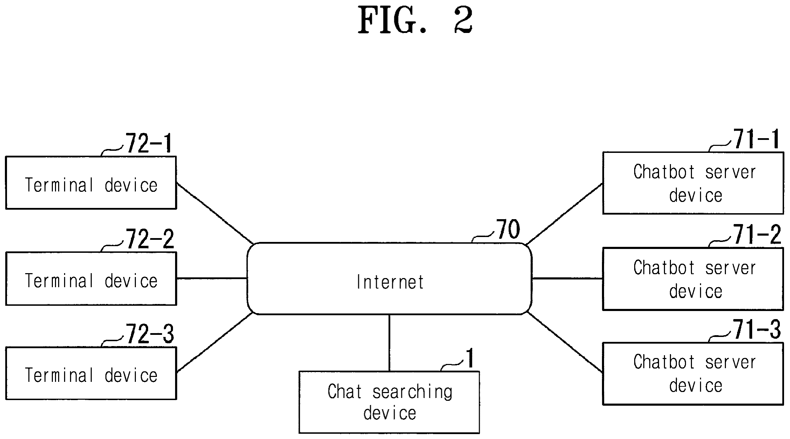

FIG. 2 is a block diagram illustrating a schematic configuration of an entire system that is an environment in which the chatbot searching device operates. As illustrated in the figure, the system is configured in a form in which the chatbot searching device 1, chatbot server devices 71-1, 71-2, 71-3, ... and terminal devices 72-1, 72-2, 72-3... are connected to each other on the Internet 70. The chatbot server devices 71-1, 71-2, 71-3, ... may be simply referred to as the chatbot server device 71. The terminal devices 72-1, 72-2, 72-3, ... may be simply referred to as the terminal device 72. In the figure, one chatbot searching device 1, three chatbot server devices 71, and three terminal devices 72 are shown. However, any number of devices may be selected.

The function of the chatbot searching device 1 is as described in FIG. 1. The chatbot searching device 1 accumulates and analyzes information about the chatbot server device 71 in advance. In accordance with the text of the questions transmitted from the terminal device 72, the chatbot searching device 1 returns, to the terminal device 72, the information about one or more appropriate chatbot server devices 71 corresponding to the question. The chatbot searching device 1 may communicate with other devices via the Internet 70.

The chatbot server device 71 provides a chatbot service to the terminal device 72. That is, in response to the input text transmitted from the terminal device 72, the chatbot server device 71 returns, to the terminal device 72, an appropriate response text corresponding to the input text. In addition, for example, in response to the request from the chatbot searching device 1, the chatbot server device 71 passes, the chatbot searching device 1, information about chat contents it has. The chatbot server device 71 may communicate with other devices via the Internet 70. The chatbot server device 71 is implemented, for example, by using a server computer. The chatbot server device 71 does not return the text input by a person as a response text, but returns the text generated as a process of the computer to the terminal device 72 as a response text. The outline of the internal functional configuration of the chatbot server device 71 will be described later with reference to another drawing.

The terminal device 72 transmits text to the chatbot server device 71. Then, as a response to the text, a response text transmitted from the chatbot server device 71 is received. The terminal device 72 may repeat the text transmission and reception to and from the chatbot server device 71 a plurality of times. Accordingly, a dialogue is established between the terminal device 72 and the chatbot server device 71. The terminal device 72 is operated, for example, by a user. The text transmitted from the terminal device 72 to the chatbot server device 71 may be input by the user using a keyboard, a touch panel, a voice recognition unit, or the like. The terminal device 72 may communicate with other devices via the Internet 70. The terminal device 72 is implemented, for example, by using a desktop PC (personal computer), a laptop PC, a tablet PC, a smartphone, a wristwatch type terminal device, a wearable terminal device, or another information device.

The terminal device 72 also transmits a text of a question to the chatbot searching device 1. The text of the questions may be input by the user. As a response to the text of the questions, the terminal device 72 receives information about one or more chatbot server devices 71 from the chatbot searching device 1. The information that the terminal device 72 receives from the chatbot searching device 1 includes access information (e.g., uniform resource locator (URL)) for accessing the corresponding chatbot server device 71. The terminal device 72 may access the corresponding chatbot server device 71 by using the access information. That is, the terminal device 72 receives the information of the chatbot server device 71 corresponding to the text of the questions transmitted to the chatbot searching device 1, which makes it possible to easily access the chatbot server device 71.

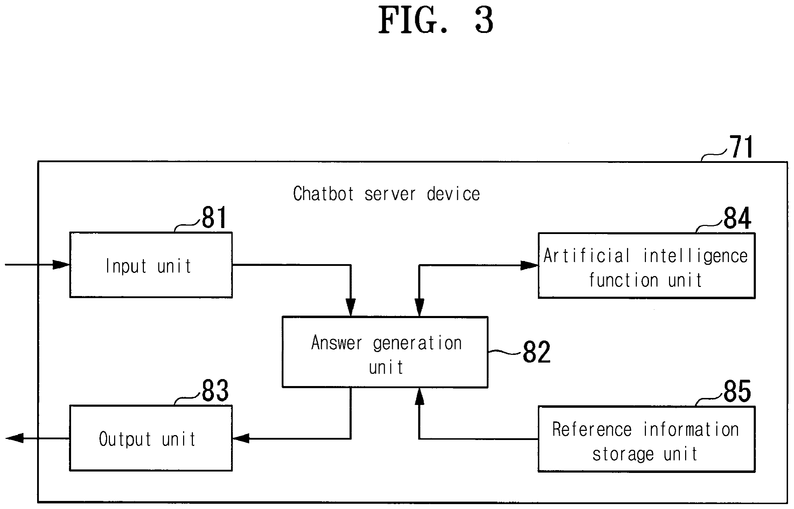

FIG. 3 is a block diagram illustrating a schematic functional configuration of the chatbot server device. As illustrated in the figure, the chatbot server device 71 is configured to include an input unit 81, an answer generation unit 82, an output unit 83, an artificial intelligence function unit 84, and a reference information storage unit 85.

The input unit 81 receives the text input from an external device (the terminal device 72 or the like). The input unit 81 passes the input text to the answer generation unit 82.

The answer generation unit 82 generates an answer in response to the input text passed from the input unit 81. Specifically, the answer generation unit 82 passes the input text to the artificial intelligence function unit 84. The answer generation unit 82 generates the text output from the artificial intelligence function unit 84 as the answer. In addition, the answer generation unit 82 may add the information read from the reference information storage unit 85 to the text output from the artificial intelligence function unit 84. The answer generation unit 82 outputs the answer thus generated as a response text. The answer generation unit 82 passes the response text to the output unit 83.

The output unit 83 returns the response text passed from the answer generation unit 82 to the original external device (terminal device 72 or the like).

The artificial intelligence function unit 84 receives the input text passed from the answer generation unit 82, and outputs the response text (answer) corresponding to the input text. The artificial intelligence function unit 84 stores a model regarding the input/output relationship. The artificial intelligence function unit 84 performs a machine learning process regarding the model in advance. That is, the artificial intelligence function unit 84 holds a model that has been learned by performing a machine learning process in advance, for example, using pairs of the input texts and the response texts as learning data (both positive and negative examples may be used). Since the model has been learned in this way, the artificial intelligence function unit 84 may output an appropriate answer (response text) corresponding to the input text. The artificial intelligence function unit 84 may perform machine learning using any method. The artificial intelligence function unit 84 uses a neural network method, for example. When the neural network is used, the artificial intelligence function unit 84 stores a weighting coefficient of a node in the neural network (weight value when calculating the weighted sum based on a plurality of output values from a previous node), as a learning result. When the neural network is used, back propagation (error back propagation method) may be used as a learning method. It is to be noted that for the method of artificial intelligence and machine learning itself, existing techniques including the neural network may be used.

The reference information storage unit 85 stores information to be added to the answer (response text) output by the artificial intelligence function unit 84. For example, the reference information storage unit 85 is a database system that holds balance information for each account in a bank. In this case, the artificial intelligence function unit 84 outputs an answer with a variable such as "balance is X yen" with regard to the input text inquiring about the balance of the account. Here, X is a variable to be replaced with numerical data. That is, the reference information storage unit 85 stores the numerical value of the balance for each account. The balance (numerical value) of the specific account stored in the reference information storage unit 85 may be referred to in order to replace the variable X. Here, although the reference information storage unit 85 has been described as storing the balance information of the bank account by way of example, the type of information stored in the reference information storage unit 85 is not limited to this and any type is possible. That is, the reference information storage unit 85 stores information to be added to the response text output by the artificial intelligence function unit 84.

With the above configuration, the chatbot server device 71 may return the appropriate response text (answer) corresponding to the input text.

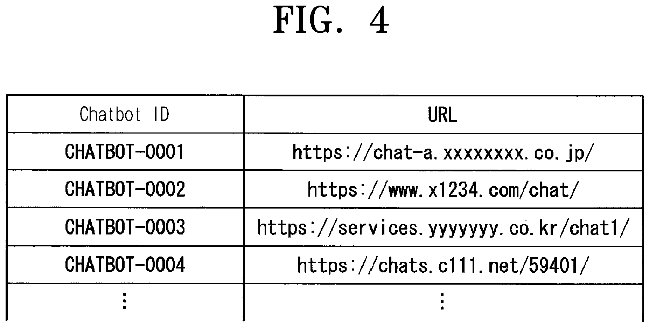

FIG. 4 is a schematic diagram illustrating a data structure of a chatbot table stored in a management information storage unit 42. As illustrated in the figure, the table is tabular data, and has items of a chatbot ID and a URL The chatbot ID is identification information given to the chatbot server device 71. The URL is information indicating the location of the chatbot server device 71. Each row in the table corresponds to one chatbot. Referring to the chatbot table makes it possible to acquire the information of the URL corresponding to a specific chatbot ID.

As an example of the data illustrated in FIG. 4, there is a chatbot ID "CHATBOT-0001". The URL corresponding to the chatbot ID "CHATBOT-0001" is "https://chat-a.xxxxxxxx.co.jp/". The chatbot table also holds data for other chatbot IDs.

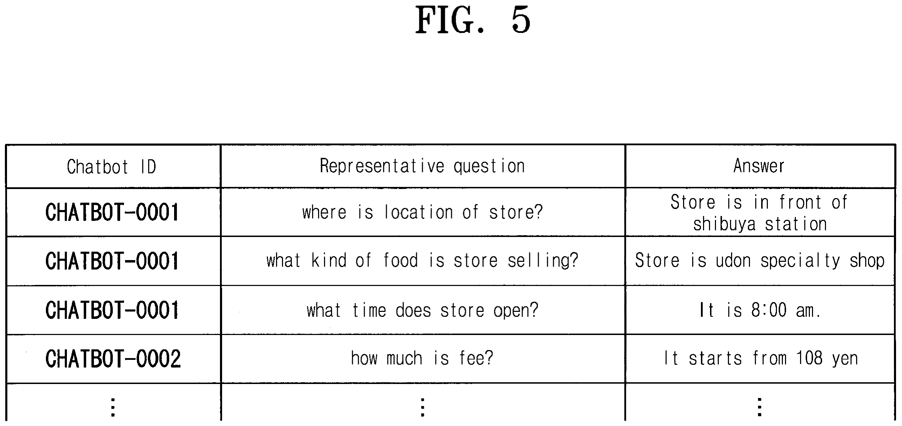

FIG. 5 is a schematic diagram illustrating a data structure of an answer table stored in the answer database storage unit 41. As illustrated in the figure, the table is tabular data, and has items of a chatbot ID, a representative question, and an answer. The chatbot ID is information for identifying the chatbot server device 71 as described above.

The representative question is data of the representative question used when the answer extraction unit 50 acquires the answer data from the chatbot server device 71. The answer is an answer (response text) that the chatbot server device 71 outputs in response to the representative question. The data in the answer table is acquired from the chatbot server device 71 by the answer extraction unit 50 and written by the answer extraction unit 50. Further, the data in the answer table is referred to by the answer analysis unit 60 when the answer is analyzed.

As an example of the data illustrated in FIG. 5, there is a representative question "where is the location of the store?" in association with the chatbot ID "CHATBOT-0001". The answer to the representative question is "the store in front of Shibuya Station". The answer table also holds data of other representative questions and corresponding answer data regarding the chatbot ID "CHATBOT-0001". Furthermore, the answer table holds data of pairs of representative questions and answers regarding other chatbot IDs.

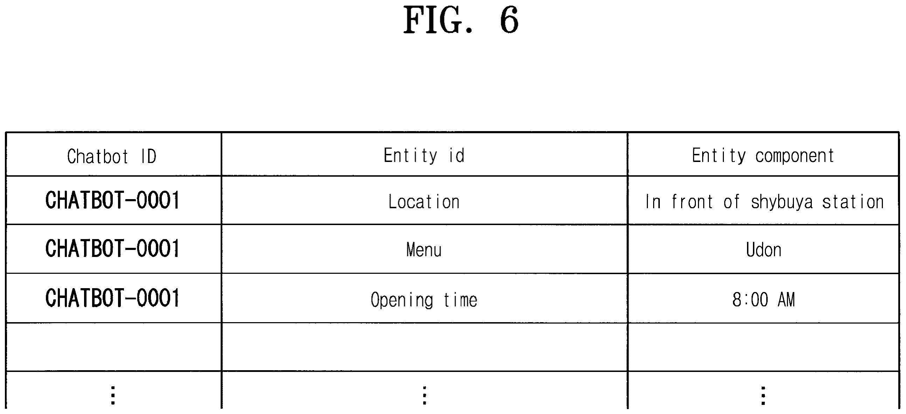

FIG. 6 is a schematic diagram illustrating a data structure of an answer analysis result table stored in the answer database storage unit 41. As illustrated in the figure, the table is tabular data, and has items of the chatbot ID, the entity ID, and the entity component. The chatbot ID is information for identifying the chatbot server device 71 as described above. Here, the entity ID is obtained as a result of analysis by the answer entity classification unit 61 based on the answer data. Furthermore, here, the entity component is obtained as a result of extraction by the answer component extraction unit 62 based on the answer data.

As an example of the data illustrated in FIG. 6, the answer analysis result table holds the following data regarding the chatbot ID "CHATBOT-0001".

That is, the answer analysis result table holds the entity component "in front of Shibuya Station" corresponding to the entity ID "location". The pair is obtained by the answer analysis unit 60 analyzing the pair of the representative question "where is the location of the store?" and the answer "the store is in front of Shibuya Station", which is illustrated in FIG. 5. That is, the answer analysis result table holds the entity component "Udon" corresponding to the entity ID "menu". The pair is obtained by the answer analysis unit 60 analyzing the pair of the representative question "what kind of food is the store selling? " and the answer "the store is an udon specialty shop", which is illustrated in FIG. 5. That is, the answer analysis result holds the entity component "8:00 am" corresponding to the entity ID "opening time". The pair is obtained by the answer analysis unit 60 analyzing the pair of the representative question "what time does the store open?" and the answer "it is 8:00 am", which is illustrated in FIG. 5.

The answer analysis result table may hold a pair of another entity ID and another entity component regarding the chatbot ID "CHATBOT-0001". In addition, the answer analysis result table holds data of a set of pairs of entity IDs and entity components in the same manner for other chatbot IDs.

Next, a process procedure of the chatbot searching device 1 will be described.

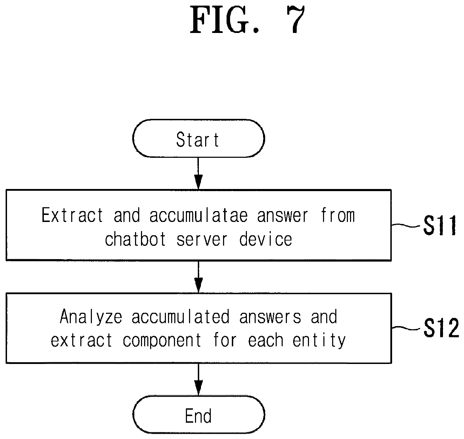

FIG. 7 is a flowchart illustrating a process procedure for writing answer data which the chatbot searching device 1 extracts from the chatbot server device 71 in the answer database storage unit 41.

In step S11 of the flowchart, the answer extraction unit 50 extracts answer data from the chatbot server device 71. The answer extraction unit 50 writes the acquired answer data in the answer table of the answer database storage unit 41.

Next, in step S12, the answer analysis unit 60 analyzes the data held in the answer table of the answer database storage unit 41, and obtains a set of pairs of entity IDs and the entity components for each chatbot ID. This is the answer analysis result data. Then, the answer analysis unit 60 writes the answer analysis result data in the answer analysis result table.

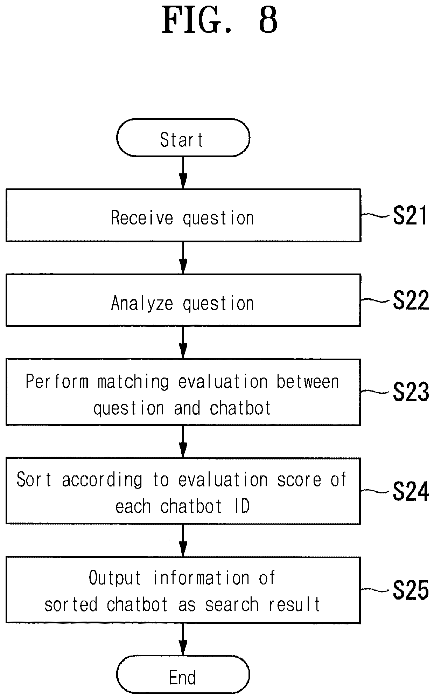

FIG. 8 is a flowchart illustrating a process procedure for obtaining and outputting a search result in response to a question transmitted from the terminal device 72 in a situation where result data from analysis of a plurality of chatbot server devices 71 is held in the answer database storage unit 41.

In step S21 of the flowchart, the service unit 10 receives a question from an external device (terminal device 72 or the like). The question is expressed as text (character string), for example. The service unit 10 passes the received question to the question analysis unit 20.

Next, in step S22, the question analysis unit 20 analyzes the passed question and extracts question feature data representing the feature of the question.

For example, when the question is "I'm in a hurry. Can you introduce me to a place where I can eat udon or soba in front of Shibuya station after 8:00 am?", the question analysis unit 20 extracts question feature data from the question. The question feature data is a set of pairs of entity IDs and entity components, and includes the following three pairs: first, the pair of the entity ID "location", and the entity component "in front of Shibuya Station"; second, the pair of the entity ID "menu" and the entity component "Udon, soba"; third, the pair of the entity ID "opening time" and the entity component" 8:00 am".

Next, in step S23, the matching evaluation unit 31 of the search unit 30 performs matching evaluation of the question and the chatbot. Specifically, the matching evaluation unit 31 performs matching evaluation (conducts the matching degree) between the question feature data extracted in step S22 and the chatbot feature data stored in the answer analysis result table (FIG. 6) of the answer database storage unit 41, and calculates the suitability between the two. For example, the matching evaluation unit 31 performs the matching evaluation between the above question feature data and the chatbot feature data of the chatbot server device 71 of the chatbot ID "CHATBOT-0001" illustrated in FIG. 6 as follows. That is, the matching rate regarding the entity ID "location" between the two is 100 %. The matching rate for the entity ID "menu" is 50 % (only one of the two items included in the question feature data is included in the chatbot feature data). The matching rate regarding the entity ID "opening time" is 100 %. In this case, the matching evaluation unit 31 calculates the average value of the matching rates of the three entity IDs and calculates the total matching rate as 84 % (however, round up after the decimal point). The matching evaluation unit 31 also obtains the matching rate with the question for other chatbot IDs.

As described above, in the present embodiment, the matching evaluation unit 31 evaluates the suitability based on the matching degree of the attribute values (entity components) in the same attribute names (entity IDs) between the chatbot feature data and the question feature data. However, the matching evaluation unit may evaluate the suitability between the chatbot feature data and the question feature data by another method (calculation formula or the like).

Next, in step S24, the search result output unit 32 of the search unit 30 sorts (e.g., sorts in the descending order) the chatbot IDs according to the total matching rate (which is used as the evaluation score) of each chatbot ID calculated by the matching evaluation unit 31.

Next, in step S25, the search result output unit 32 outputs, as a search result, the information of the chatbot server device 71 after the sorting in step S24. The search result is passed from the search result output unit 32 to the service unit 10, and is transmitted to an external device as a questioner (the terminal device 72 or the like. In this case, the search result output unit 32 reads access information (URL) corresponding to the chatbot ID from the management information storage unit 42 (FIG. 4), adds it to the search result information, and outputs it.

As described above, according to the present embodiment, in the answer database storage unit 41, information (answer data and the analysis result data) representing features of each chatbot server device 71 may be accumulated in advance. Then, when a question is received from the external terminal device 72 and the like, by the matching evaluation between the question feature data and the chatbot feature data, the information of the chatbot server device 71 having high suitability for the received question may be appropriately provided to the device as the questioner.

In addition, in the above-described embodiment, at least a part of the functions of the chatbot searching device, the chatbot server device, and the terminal device may be implemented by a computer. In this case, a program for implementing the functions may be recorded on a computer-readable recording medium, and the program recorded on the recording medium may be loaded and executed in a computer system. In addition, "computer system" as mentioned herein includes an OS or hardware such as peripheral devices. Furthermore, the "computer-readable recording medium" refers to portable media such as flexible disks, magneto-optical disks, ROMs, CD-ROMs, DVD-ROMs, and USB memories, storage devices such as hard disks built into computer systems, and the like. In addition, the "computer-readable recording medium" may include a medium for temporarily and dynamically maintaining programs, like a communication line when a program is transmitted via a network such as the Internet or a communication line such as a telephone line, and a medium for storing programs for a predetermined time, like a volatile memory inside a computer system including a server and a client in that case. The program may be a program for implementing a part of the functions described above, or a program capable of implementing the functions described above together with a program previously recorded in a computer system.

While the embodiment of the present invention has been described in detail with reference to the drawings, specific configurations are not limited to the embodiment and may include any design in the scope without departing from the subject matter of the present invention.

### INDUSTRIAL APPLICABILITY

The present invention is applicable throughout, for example, a business providing a so-called search engine or a service industry using such technology. However, the scope of the present invention is not limited to those illustrated herein.

### [Reference Sings List]

1 Chatbot searching device
10 Service unit
20 Question analysis unit
21 Question entity classification unit
22 Question component extraction unit
30 Search unit
31 Matching evaluation unit
32 Search result output unit
41 Answer database storage unit (Answer data storage unit)
42 Management information storage unit
50 Answer extraction unit
60 Answer analysis unit
61 Answer entity classification unit
62 Answer component extraction unit
70 Internet
71, 71-1, 71-2, 71-3 Chatbot server device
72-1, 72-2, 72-3 Terminal device
81 Input unit
82 Answer generation unit
83 Output unit
84 Artificial intelligence function unit
85 Reference information storage unit

## Claims

1. A searching device comprising:
an answer extraction unit that acquires answer data from a chatbot server device generating and outputting an answer to an input text, the answer data being data on the answer output by the chatbot server device;
an answer data storage unit that stores the answer data acquired by the answer extraction unit in association with chatbot identification information for identifying a chatbot server device as an originator;
an answer analysis unit that analyzes a feature of the answer data stored in the answer data storage unit, and writes a result of the analysis as chatbot feature data in the answer data storage unit in association with the chatbot identification information;
a question analysis unit that analyzes a feature of a question received from an outside in a situation where the chatbot feature data is held in the answer data storage unit and outputs question feature data that is the result of the analysis;
a matching evaluation unit that evaluates suitability between the chatbot feature data and the question feature data; and
a search result output unit that outputs information of the chatbot server device suitable for the question based on the suitability evaluated by the matching evaluation unit.

2. The apparatus of claim 1, wherein The searching device of claim 1, wherein the chatbot feature data is a set of a pair of an attribute name and an attribute value of a thing represented by the answer data, and the question feature data is a set of a pair of an attribute name and an attribute value of a thing represented by the question.

3. The searching device of claim 2, wherein the suitability is based on a matching degree of the attribute values in the same attribute names between the chatbot feature data and the question feature data.

4. The searching device of any one of claims 1 to 3, wherein the answer extraction unit transmits contents of a representative input text to the chatbot server device, and acquires the answer data output by the chatbot server device in response to the representative input text.

5. The searching device of any one of claims 1 to 4, wherein the search result output unit outputs information of the chatbot server device by including access information for accessing the chatbot server device.

6. A program that causes a computer to function as a searching device including:
an answer extraction unit that acquires answer data from a chatbot server device generating and outputting an answer to an input text, the answer data being data on the answer output by the chatbot server device;
an answer data storage unit that stores the answer data acquired by the answer extraction unit in association with chatbot identification information for identifying a chatbot server device as an originator;
an answer analysis unit that analyzes a feature of the answer data stored in the answer data storage unit, and writes chatbot feature data that is a result of the analysis in the answer data storage unit in association with the chatbot identification information;
a question analysis unit that analyzes a feature of a question received from an outside in a situation where the chatbot feature data is held in the answer data storage unit and outputs question feature data that is the result of the analysis;
a matching evaluation unit that evaluates suitability between the chatbot feature data and the question feature data; and
a search result output unit that outputs information of the chatbot server device suitable for the question based on the suitability evaluated by the matching evaluation unit.

7. A computer-readable recording medium having a program recorded thereon, the program causing a computer to function as a searching device including:
an answer extraction unit that acquires answer data from a chatbot server device generating and outputting an answer to an input text, the answer data being data on the answer output by the chatbot server device;
an answer data storage unit that stores the answer data acquired by the answer extraction unit in association with chatbot identification information for identifying a chatbot server device as an originator;
an answer analysis unit that analyzes a feature of the answer data stored in the answer data storage unit, and writes chatbot feature data that is a result of the analysis in the answer data storage unit in association with the chatbot identification information;
a question analysis unit that analyzes a feature of a question received from an outside in a situation where the chatbot feature data is held in the answer data storage unit and outputs question feature data that is the result of the analysis;
a matching evaluation unit that evaluates suitability between the chatbot feature data and the question feature data; and
a search result output unit that outputs information of the chatbot server device suitable for the question based on the suitability evaluated by the matching evaluation unit.
